# EUROPÄISCHE PATENTSCHRIFT

(11) **EP 1 048 865 B1**
(45) Veröffentlichungstag und Bekanntmachung des Hinweises auf die Patenterteilung: **02.01.2004**
(21) Anmeldenummer: 00108540.6
(22) Anmeldetag: 19.04.2000
(51) Int. Cl.: F16D 3/84, F16J 3/04

(54) **Flexibler Schutzbalg, vorzugsweise zum Schutz von Fahrzeugbauteilen**
Flexible protective gaiter for vehicle parts
Soufflets flexibles de protection pour pièces de véhicule

(30) Priorität: 21.04.1999 DE 19917998
(43) Veröffentlichungstag der Anmeldung: 02.11.2000
(73) Patentinhaber: ContiTech Vibration Control GmbH, 30165 Hannover (DE)
(72) Erfinder: Liebich, Charl, 29451 Dannenberg (DE)
(74) Vertreter: Schneider, Egon

(56) Entgegenhaltungen:
- DE-A- 2 034 753
- DE-A- 3 049 059
- US-A- 3 041 885

## Beschreibung

Die Erfindung betrifft einen flexiblen Schutzbalg, vorzugsweise zum Schutz von Fahrzeugbauteilen, insbesondere einen Lenkungsbalg gemäß Oberbegriff des Anspruchs 1.

Ein in derartigen Schutzbälgen enthaltenes Druckausgleichselement dient dem Abbau einer Druckdifferenz, die zwischen dem Innendruck des Schutzbalges und der äußeren Atmosphäre in Folge von beispielsweise Temperaturänderungen und mechanischen Beanspruchungen entsteht.

So ist aus der DE 29 00 026 C3 eine Entlüftungsvorrichtung für ein Wellengelenk mit Faltenbalg-Abdichtung bekannt, bei der die Strömungsverbindung zwischen dem Innenraum eines durch den Faltenbalg abgedichteten Gelenks und der freien Atmosphäre mittels einer geschlitzten Muffe gebildet ist, welche zwischen einer ersten Welle und der entsprechenden Befestigungsmuffe angeordnet ist und die am Innenumfang eine axial verlaufende Nut aufweist, die auch nach dem Festziehen der Befestigungsmuffe einen Luftdurchlaß ermöglicht.

Eine solche Lösung ist mit dem Nachteil verbunden. daß durch die vorhandene Öffnung Wasser und Schmutz in den Gelenkraum eindringen können und damit das zu schützende Bauteil einem nicht vernachlässigbaren Verschleiß unterliegt.

Aus der DE 40 33 275 C2 ist des weiteren ein Roll- oder Faltenbalg für ein Gleichlaufdrehgelenk mit Druckausgleich im Gelenkraum bekannt, der mit einer Druckausgleichsöffnung versehen ist, die radial verläuft und in dem elastischen Wandungsbereich ausgebildet ist, der bei erhöhter Betriebsdrehzahl des Rolloder Faltenbalges aufgrund von Fliehkräften von der Welle abhebend ausgeführt ist.

Mit dieser Lösung wird zwar bei Stillstand des Fahrzeuges eine zuverlässige Abdichtung gewährleistet, jedoch kann auch hier das Eindringen von Wasser und Fremdstoffen während der Fahrt des Fahrzeuges nicht verhindert werden.

Ferner ist aus der US-A-3 049 885 ein Faltenbalg bekannt, in dessen Wandung Druckausgleichselemente eingesetzt sind, wobei für deren Anbringung ausschliesslich der flexible Faltenbereich des Balges vorgesehen ist. Derartige Faltenbälge konnten sich in der Praxis nicht bewähren, da die Druckausgleichselemente in diesem Bereich die funktionswichtige Flexibilität der Balgwandung örtlich verminderten, was zu Wandungsbrüchen führte.

Der Erfindung liegt die Aufgabe zugrunde, unabhängig von der jeweiligen Einsatzsituation und Beanspruchung des Faltenbalges eine zuverlässige Abdichtung desselben zu erreichen und dabei einen Druckausgleich zwischen dem Innenraum des Faltenbalges und der Atmosphäre zu gewährleisten.

Erfindungsgemäss wird diese Aufgabe an einem Faltenbalg gemäss Oberbegriff des Anspruchs 1 dadurch gelöst, daß, entsprechend dem kennzeichnenden Teil, das zumindest eine gasdurchlässige, flüssigkeitsdichte Druckausgleichselement in der Übergangszone vom Befestigungsbund zum flexiblen Faltenbereich in die Wandung des Schutzbalges eingesetzt ist oder zumindest einen Teilbereich der Wandung der Übergangszone bildet.

Die Erfindung ist mit dem Vorteil verbunden, dass eine zuverlässige Abdichtung der zu schützenden Bauteile durch den Schutzbalg bei kontinuierlichem Druckausgleich erreicht wird. Auch bleiben diese Eigenschaften des Faltenbalges bei translatorischer Bewegung oder Rotation des zu schützenden Bauteils erhalten.

In zweckmässiger Ausführung der Erfindung kommt im Druckausgleichselement als Filter ein Gewebe zum Einsatz, das bei gegebener Flexibilität bzw. Elastizität geringe Druckdifferenzen zwischen Balginnendruck und Luftdruck auch durch Form- bzw. Lageänderungen auszugleichen ermöglicht. Die Fäden des Gewebes können mit einer Beschichtung versehen sein.

Dabei besteht die Möglichkeit, das Druckausgleichselement in seiner Gesamtheit aus dem betreffenden Gewebe zu bilden oder aber aus anderen Stoffen gebildete Teilbereiche vorzusehen, über die Verbindung zum angrenzenden Schutzbalg hergestellt wird.

In weiterer Ausgestaltung der Erfindung ist das Druckausgleichselement in einer Aussparung in der Wandung des Schutzbalges fixiert. Dabei kann dieses in radialer Richtung formschlüssig von außen in den Schutzbalg eingesetzt sein.

Zur Sicherung des Druckausgleichselementes in seiner Einbaulage erfolgt zweckmäßig eine teilweise Überdeckung desselben mit einem Sicherungselement, das stoffschlüssig mit dem angrenzenden Schutzbalg verbunden sein kann.

Das Druckausgleichselement befindet sich gemäss der Erfindung in der Übergangszone vom Befestigungsbund zum flexiblen Zwischenbereich, da in einer solchen Zone definierte mechanische Beanspruchungsverhältnisse für das Druckausgleichselement und den angrenzenden Bereich des Schutzbalges erreicht werden können.

Die Erfindung soll nachfolgend anhand eines Ausführungsbeispiels und zugehöriger Zeichnungen näher erläutert werden.

Es zeigen
- Fig. 1: einen flexiblen Schutzbalg, der in den beiden Übergangszonen vom Befestigungsbund zum Faltenbereich je ein Druckausgleichselement aufweist,
- Fig. 2: einen um 90° zur Längsachse gedrehten und teilweise geschnittenen Faltenbalg gemäß Fig. 1 und
- Fig. 3: eine vergrößerte Darstellung einer Übergangszone von einem Befestigungsbund in einen Faltenbereich mit integriertem Druckausgleichselement.

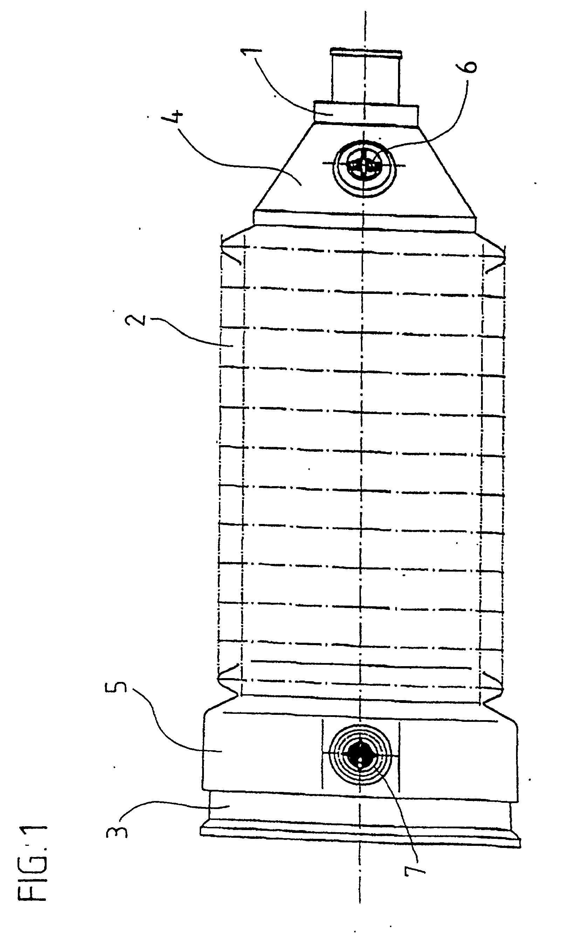

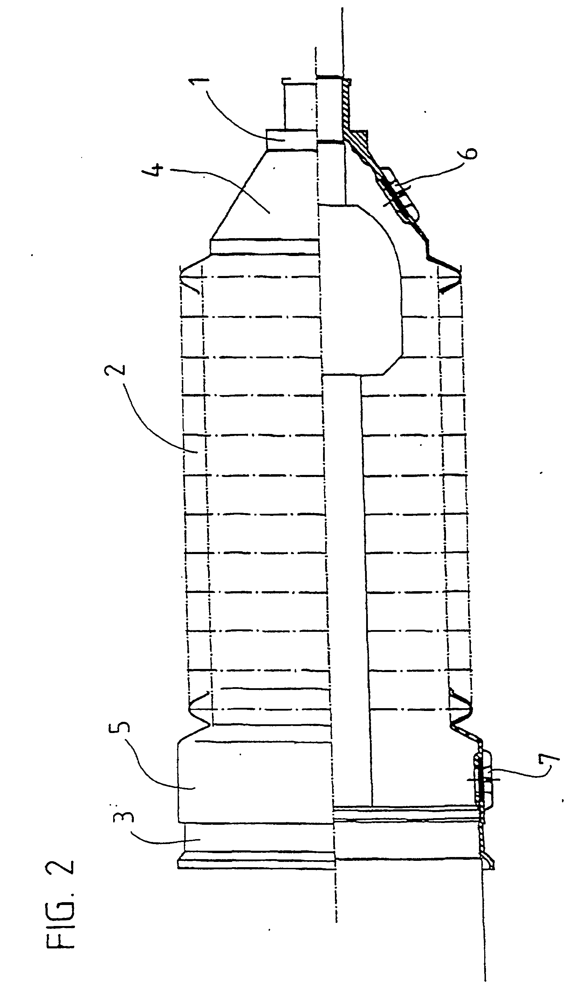

Der in Fig. 1 und Fig. 2 dargestellte Schutzbalg für eine Fahrzeuglenkung besteht aus einem Befestigungsbund 1 geringen Durchmessers, einem flexiblen Faltenbereich 2, einem weiteren Befestigungsbund 3 größeren Durchmessers und zwei Übergangszonen 4 und 5, die zu einer Beabstandung von Befestigungsbund 1 und 3 zu dem Faltenbereich 2 führen.

Die zylindrisch bzw. kegelstumpfförmig ausgeführten Übergangszonen 4 und 5 enthalten als Druckausgleichselemente 6 und 7 beschichtete, beispielsweise aus PP und TPFE hergestellte Gewebe, über die bei einer hinreichend hohen Druckdifferenz ein weitgehender Druckausgleich erfolgt. Vorteilhaft ist dabei, daß in den Übergangszonen 4 und 5 eine nur geringe Beanspruchung des Schutzbalges durch Formänderungen auftritt.

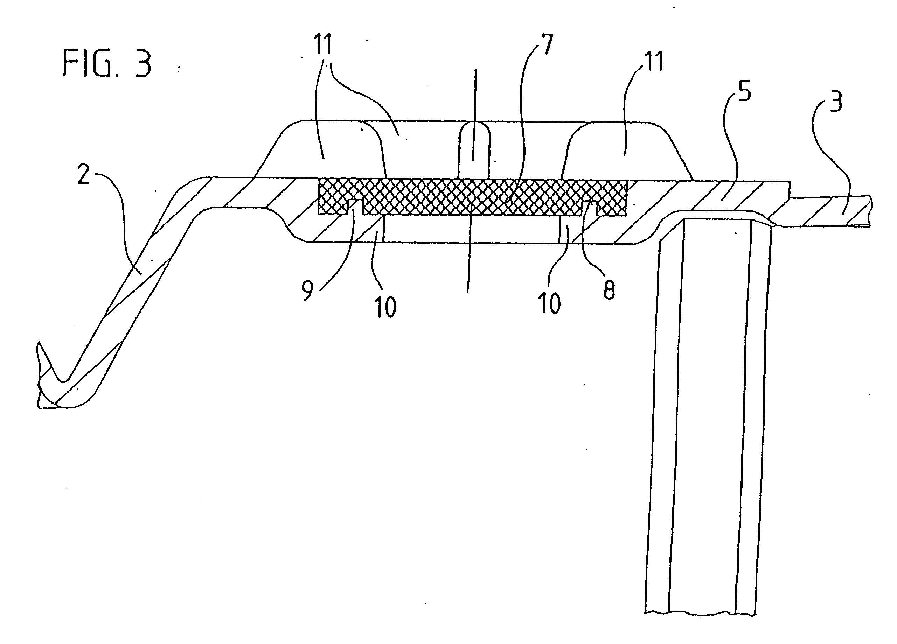

In das Druckausgleichselement 7 ist gemäß Fig. 3 eine Ringnut 8 eingebracht, die mit einem kreisförmigen Vorsprung 9 einer Auflagefläche 10 des Schutzbalges korrespondiert.

Auf der Außenfläche des Schutzbalges befindet sich ein kreisringförmiges Abdeckelement 11, das durch Umspritzen des Randbereiches des Druckausgleichselementes 5 und des angrenzenden Schutzbalgbereiches entstanden ist, wodurch das Druckausgleichselement am Außenrand fixiert und im Mittenbereich ein Druckausgleich ermöglicht wird.

Ein derart ausgebildetes und in den Schutzbalg eingefügtes Druckausgleichselement gewährleistet einen kontinuierlichen Druckausgleich, der bei auftretenden Temperaturänderungen und mechanischen Beanspruchungen erforderlich wird.

## Patentansprüche

1. Flexibler Schutzbalg, vorzugsweise zum Schutz von Fahrzeugbauteilen, insbesondere Lenkungsfaltenbalg, dessen Wandung zumindest aus einem ersten und einem zweiten jeweils endseitig angeordneten, auf einem Bauteil festlegbaren Befestigungsbund **(1,3)** und einem zwischen dem ersten und dem zweiten Befestigungsbund **(1,3)** verlaufenden, zu dem zu schützenden Bauteil beabstandeten, flexiblen Zwischenbereich **(2)** besteht und der zumindest ein Druckausgleichselement **(6,7)** in Form eines gasdurchlässigen Festkörperfilters enthält,
**dadurch gekennzeichnet,**
**dass** das zumindest eine gasdurchlässige, flüssigkeitsdichte Druckausgleichselement **(6, 7)** in der Übergangszone **(4, 5)** vom Befestigungsbund **(1, 3)** zum flexiblen Zwischenbereich **(2)** in die Wandung des Schutzbalges eingesetzt ist oder zumindest einen Teilbereich der Wandung der Übergangszone **(4, 5)** bildet.

2. Flexibler Schutzbalg nach Anspruch 1, **dadurch gekennzeichnet, daß** in dem Druckausgleichselement (6, 7) als Filter ein Gewebe zum Einsatz kommt.

3. Flexibler Schutzbalg nach Anspruch 2, **dadurch gekennzeichnet, daß** die Fäden des Gewebes mit einer Beschichtung versehen sind.

4. Flexibler Schutzbalg nach Anspruch 1, **dadurch gekennzeichnet, daß** das Druckausgleichselement (6,7) in einer Aussparung der Wandung des Schutzbalges fixiert ist.

5. Flexibler Schutzbalg nach Anspruch 4, **dadurch gekennzeichnet, daß** das Druckausgleichselement (6, 7) in radialer Richtung formschlüssig von außen in den Schutzbalg eingesetzt ist.

6. Flexibler Schutzbalg nach Anspruch 4 oder 5, **dadurch gekennzeichnet, daß** der Randbereich des eingesetzten Druckausgleichselements (6,7) von einem stoffschlüssig mit dem angrenzenden Schutzbalg verbundenen Sicherungselement (11) überdeckt ist.

## Claims

1. Flexible protective bellows, preferably for the protection of vehicle components, more especially a steering expansion bellows, the wall of which at least comprises a first mounting collar (1) and a second mounting collar (3), which collars are disposed at each end and are securable on a respective component, and a flexible intermediate region (2), which extends between the first and second mounting collars (1, 3) and is spaced at a distance from the component to be protected, and which bellows includes at least one pressure compensation member (6, 7) in the form of a gas-permeable solids filter, **characterised in that** the at least one gas-permeable, liquid-tight pressure compensation member (6, 7) is inserted into the wall of the protective bellows in the transitional zone (4, 5) from the mounting collar (1, 3) to the flexible intermediate region (2) or forms at least one partial region of the wall of the transitional zone (4, 5).

2. Flexible protective bellows according to claim 1, **characterised in that** a fabric is used as the filter in the pressure compensation member (6, 7).

3. Flexible protective bellows according to claim 2, **characterised in that** the filaments of the fabric are provided with a coating.

4. Flexible protective bellows according to claim 1, **characterised in that** the pressure compensation member (6, 7) is secured in a recess in the wall of the protective bellows.

5. Flexible protective bellows according to claim 4, **characterised in that** the pressure compensation member (6, 7) is inserted from externally into the protective bellows in a form-fitting manner in the radial direction.

6. Flexible protective bellows according to claim 4 or 5, **characterised in that** the edge region of the inserted pressure compensation member (6, 7) is covered by a safety member (11), which is connected to the adjacent protective bellows in a materially joined manner.

## Revendications

1. Soufflet de protection souple, de préférence pour la protection d'éléments de véhicules, en particulier soufflet de direction, dont la paroi est composée au moins d'un premier et d'un deuxième bourrelets de fixation (1, 3) disposés chacun à une extrémité, qui peuvent être fixés à un élément, et d'une région intermédiaire souple s'étendant entre le premier et le deuxième bourrelets de fixation (1, 3) et espacée de l'élément à protéger, et qui comprend au moins un élément d'équilibrage de la pression (6, 7) formé d'un filtre à solides perméable aux gaz,
**caractérisé**
**en ce que** l'au moins un élément d'équilibrage de la pression (6, 7) perméable aux gaz, étanche aux liquides est encastré dans la paroi du soufflet de protection, dans la région de transition (4, 5) entre le bourrelet de fixation (1, 3) et la région intermédiaire souple (2), ou qui forme au moins une région partielle de la paroi de la zone de transition (4, 5).

2. Soufflet de protection souple selon la revendication 1,
**caractérisé**
**en ce qu'**un tissu est utilisé comme filtre dans l'élément d'équilibrage de la pression (6, 7).

3. Soufflet de protection souple selon la revendication 2,
**caractérisé**
**en ce que** les fils du tissu sont munis d'une enduction.

4. Soufflet de protection souple selon la revendication 1,
**caractérisé**
**en ce que** l'élément d'équilibrage de la pression (6, 7) est fixé dans un évidement de la paroi du soufflet de protection.

5. Soufflet de protection souple selon la revendication 4,
**caractérisé**
**en ce que** l'élément d'équilibrage de la pression (6, 7) est encastré de l'extérieur dans le soufflet de protection dans la direction radiale en formant une liaison par sûreté de forme.

6. Soufflet de protection souple selon la revendication 4 ou 5,
**caractérisé**
**en ce que** la région de bord de l'élément d'équilibrage de la pression encastré (6, 7) est recouverte par un élément d'arrêt (11) qui est assemblé au soufflet de protection adjacent par une liaison par continuité de matière.
